(19) Europäisches Patentamt
European Patent Office
Office européen des brevets

(11) Veröffentlichungsnummer: **0 023 669**
**B1**

# (12) EUROPÄISCHE PATENTSCHRIFT

(45) Veröffentlichungstag der Patentschrift: **08.09.82**

(51) Int. Cl.³: **C 07 C 103/737**, A 01 N 37/22

(21) Anmeldenummer: **80104327.4**

(22) Anmeldetag: **23.07.80**

## (54) Cycloalkan(alken)carbonsäure-anilide, Verfahren zu ihrer Herstellung sowie ihre Verwendung als Fungizide.

(30) Priorität: **03.08.79 DE 2931640**

(43) Veröffentlichungstag der Anmeldung: **11.02.81 Patentblatt 81/6**

(45) Bekanntmachung des Hinweises auf die Patenterteilung: **08.09.82 Patentblatt 82/36**

(84) Benannte Vertragsstaaten: **AT BE CH DE FR GB IT LI NL**

(56) Entgegenhaltungen:
**EP-A-0 005 591**
**EP-A-0 010 673**
**DE-A-1 803 084**
**FR-A-2 210 604**

(73) Patentinhaber: **BAYER AG, Zentralbereich Patente, Marken und Lizenzen, D-5090 Leverkusen 1, Bayerwerk (DE)**

(72) Erfinder: **Lunkenheimer, Winfried, Dr., Bismarckstrasse 29, D-5600 Wuppertal 1 (DE)**
Erfinder: **Stetter, Jörg, Dr., Gellertweg 4, D-5600 Wuppertal 1 (DE)**
Erfinder: **Brandes, Wilhelm, Dr., Eichendorffstrasse 3, D-5623 Leichlingen (DE)**

**EP 0 023 669 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Cycloalkan(alken)carbonsäure-anilide, Verfahren zu ihrer Herstellung sowie ihre Verwendung als Fungizide

Die vorliegende Erfindung betrifft neue Cycloalkan(alken)carbonsäure-anilide, mehrere Verfahren zu ihrer Herstellung und ihre Verwendung als Fungizide.

Es ist bereits bekannt geworden, dass N-Chloracetyl-N-(2,6-dialkylphenyl)-alaninalkylester, wie beispielsweise N-Chloracetyl-N-(2-ethyl-6-methylphenyl)-alanin-ethylester, mit gutem Erfolg zur Bekämpfung von pilzlichen Pflanzenkrankheiten eingesetzt werden können (vergleiche DE-OS-2 350 944). Weiterhin ist aus der DE-OS-1 803 084 bekannt, dass Cyclopropancarbon-anilide zur Schädlingsbekämpfung, beispielsweise zur Bekämpfung von phytopathogenen Pilzen, in Landwirtschaft und Gartenbau einsetzbar sind.

Deren Wirkung ist jedoch, insbesondere bei niedrigen Aufwandmengen und -konzentrationen, insbesondere auch bei der Bekämpfung von Phytophthora-Arten, nicht immer ganz befriedigend.

Es wurden neue Cycloalkan(alken)carbonsäure-anilide der allgemeinen Formel

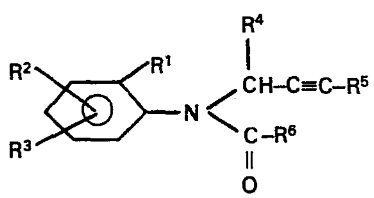

(I)

in welcher

$R^1$ für Wasserstoff, Alkyl oder Halogen steht,

$R^2$ für Wasserstoff oder Alkyl steht,

$R^3$ für Wasserstoff oder Alkyl steht,

$R^4$ für Wasserstoff oder Alkyl steht,

$R^5$ für Wasserstoff, Alkyl, Halogen oder gegebenenfalls substituiertes Phenyl steht und

$R^6$ für gegebenenfalls substituiertes Cycloalkyl oder Cycloalkenyl steht,

gefunden.

Weiterhin wurde gefunden, dass man die Cycloalkan(alken)carbonsäure-anilide der Formel (I) erhält, wenn man

a) N-Propargyl-aniline der Formel

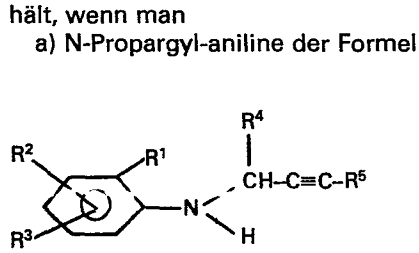

(II)

in welcher

$R^1$ bis $R^5$ die oben angegebene Bedeutung haben,

1) mit Säurechloriden oder -bromiden bzw. -anhydriden der Formel

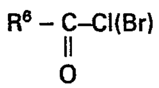

(IIIa)

bzw.

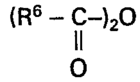

(IIIb)

in welchen

$R^6$ die oben angegebene Bedeutung hat, in Gegenwart eines Verdünnungsmittels und gegebenenfalls in Gegenwart eines Säurebindemittels umsetzt, oder

2) mit Carbonsäuren der Formel

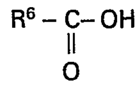

(IIIc)

in welcher

$R^6$ die oben angegebene Bedeutung hat, in Gegenwart eines Aktivierungsagens und gegebenenfalls in Gegenwart eines Säurebindemittels umsetzt, oder

b) Anilide der Formel

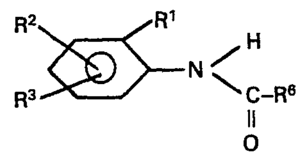

(IV)

in welcher

$R^1$ bis $R^3$ und

$R^6$ die oben angegebene Bedeutung haben, mit Propargylhalogeniden der Formel

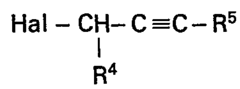

(V)

in welcher

$R^4$ und $R^5$ die oben angegebene Bedeutung haben, und

Hal für Chlor oder Brom steht,

in Gegenwart eines Säurebinders und gegebenenfalls in Gegenwart eines organischen Verdünnungsmittels oder in einem wässrig-organischen Zweiphasensystem in Gegenwart eines Phasentransferkatalysators umsetzt; oder einzelne Verbindungen der Formel (I), indem man

c) erfindungsgemässe N-Propargyl-anilide der Formel

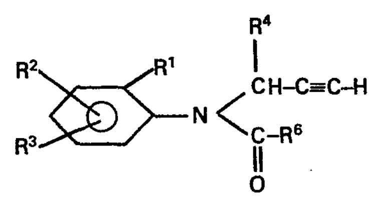

(Ia)

in welcher

$R^1$ bis $R^4$ und

$R^6$ die oben angegebene Bedeutung haben, in an sich bekannter Art und Weise mit Alkalihypohalogenit in Gegenwart eines Verdünnungsmittels umsetzt.

Die neuen Cycloalkan(alken)carbonsäure-anilide weisen starke fungizide Eigenschaften auf. Dabei zeigen überraschenderweise die erfindungsgemässen Verbindungen eine erheblich höhere Wirkung als der aus dem Stand der Technik bekannte N-Chloracetyl-N-(2-ethyl-6-methyl-phenyl)-alanin-ethylester, welcher chemisch und wirkungsmässig eine naheliegende Verbindung ist. Die erfindungsgemässen Stoffe stellen somit eine Bereicherung der Technik dar.

Die erfindungsgemässen Cycloalkan(alken)carbonsäure-anilide sind durch die Formel (I) allgemein definiert. In dieser Formel stehen $R^1$, $R^2$, $R^3$, $R^4$ und $R^5$ vorzugsweise für Wasserstoff und geradkettiges oder verzweigtes Alkyl mit 1 bis 4 Kohlenstoffatomen. $R^1$ steht ausserdem vorzugsweise für Halogen, wie insbesondere Fluor, Chlor oder Brom. $R^5$ steht ausserdem vorzugsweise für gegebenenfalls durch Halogen, Alkyl mit 1 bis 4 Kohlenstoffatomen und Nitro substituiertes Phenyl, sowie für Halogen.

$R^6$ steht vorzugsweise für gegebenenfalls substituiertes Cycloalkyl mit 3 bis 7 Kohlenstoffatomen oder Cycloalkenyl mit 4 bis 7 Kohlenstoffatomen, wobei als Substituenten vorzugsweise infrage kommen: Alkyl mit 1 bis 4 Kohlenstoffatomen; Alkenyl mit 2 bis 4 Kohlenstoffatomen; Halogenalkyl mit 1 bis 4 Kohlenstoff- und bis zu 5 gleichen oder verschiedenen Halogenatomen, wobei als Halogene Fluor, Chlor und Brom genannt seinen; Halogenalkenyl mit 2 bis 4 Kohlenstoff- und bis zu 5 gleichen oder verschiedenen Halogenatomen, wobei als Halogene Fluor, Chlor und Brom genannt seien; Halogen, Alkoxy mit 1 bis 4 Kohlenstoffatomen sowie eine zwei- bis fünfgliedrige Methylenbrücke.

Ganz besonders bevorzugt sind diejenigen Cycloalkan(alken)carbonsäure-anilide der Formel (I), in denen $R^1$, $R^2$ und $R^3$ für Wasserstoff, Methyl, Ethyl, Isopropyl, sek.-Butyl und tert.-Butyl stehen; $R^1$ ausserdem für Chlor oder Brom steht; $R^4$ für Wasserstoff, Methyl oder Ethyl steht; $R^5$ für Wasserstoff, Methyl, Ethyl, Phenyl, Brom, Chlor oder Jod steht; und $R^6$ für Cyclopropyl, Cyclobutyl, Cyclopentyl, Cyclohexyl, Cycloheptyl, Cyclobutenyl, Cyclopentenyl, Cyclohexenyl oder Cycloheptenyl steht, die einfach oder mehrfach, gleich oder verschieden substituiert sein können durch Methyl, Ethyl, Vinyl, Allyl, Fluor, Chlor, Chlormethyl, Trifluormethyl, Dichlorvinyl, Dibromvinyl, Methoxy, Trimethylen, Isobutylen.

Im einzelnen seien ausser den bei den Herstellungsbeispielen genannten Verbindungen die folgenden Verbindungen der allgemeinen Formel (I) genannt

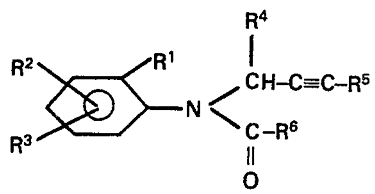

(I)

| $R^1$ | $R^2$ | $R^3$ | $R^4$ | $R^5$ | $R^6$ |
|---|---|---|---|---|---|
| $CH_3$ | 6-$CH_3$ | H | $CH_3$ | $CH_3$ | 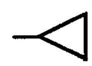 |
| $CH_3$ | 6-$CH_3$ | H | $CH_3$ | Br | 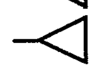 |
| Cl | 6-$CH_3$ | H | $CH_3$ | H | 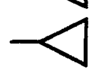 |
| $C_2H_5$ | 6-$CH_3$ | H | $CH_3$ | H | 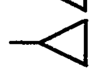 |
| $C_2H_5$ | 6-$C_2H_5$ | H | $CH_3$ | H | 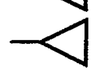 |
| $CH_3$ | 3-$CH_3$ | 6-$CH_3$ | $CH_3$ | H | 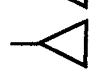 |
| $CH_3$ | H | H | $CH_3$ | H | 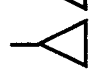 |
| $C_2H_5$ | H | H | $CH_3$ | H | 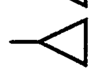 |
| Cl | H | H | $CH_3$ | H | 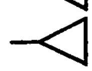 |
| i-$C_3H_7$ | H | H | $CH_3$ | H | 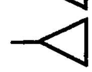 |
| t-$C_4H_9$ | H | H | $CH_3$ | H | 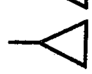 |
| $CH_3$ | 6-$CH_3$ | H | $CH_3$ | H | 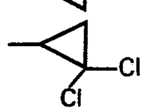 |

| $R^1$ | $R^2$ | $R^3$ | $R^4$ | $R^5$ | $R^6$ |
|---|---|---|---|---|---|
| $CH_3$ | 6-$CH_3$ | H | $CH_3$ | H | 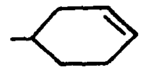 |
| $CH_3$ | 6-$CH_3$ | H | $CH_3$ | H | 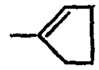 |
| $CH_3$ | 6-$CH_3$ | H | $CH_3$ | H | 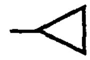 |
| $CH_3$ | 6-$CH_3$ | H | $C_2H_5$ | H | 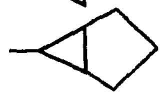 |

Verwendet man beispielsweise 3-(2,6-Dimethyl-anilino)-1-butin und Cyclopropancarbonsäurechlorid als Ausgangsstoffe, so kann der Reaktionsablauf durch das folgende Formelschema wiedergegeben werden (Verfahren $a_1$):

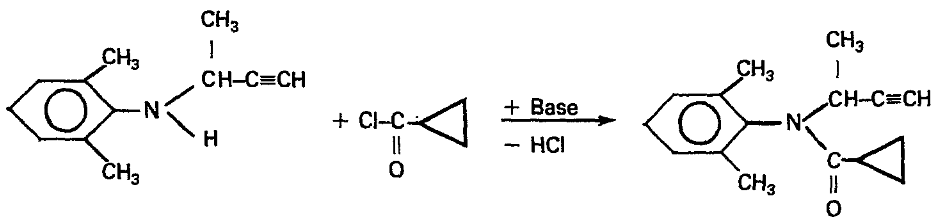


Verwendet man beispielsweise 3-(2,6-Dimethyl-anilino)-1-butin und Cyclopentancarbonsäure als Ausgangsstoffe, so kann der Reaktionsablauf durch das folgende Formelschema wiedergegeben werden (Verfahren $a_2$):

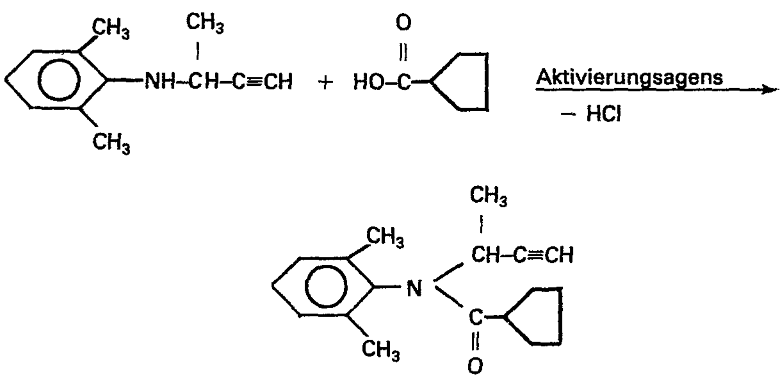


Verwendet man beispielsweise 2,6-Dimethylcyclopropancarbonsäure-anilid und Propargylbromid als Ausgangsstoffe, so kann der Reaktionsablauf durch das folgende Formelschema wiedergegeben werden (Verfahren b):

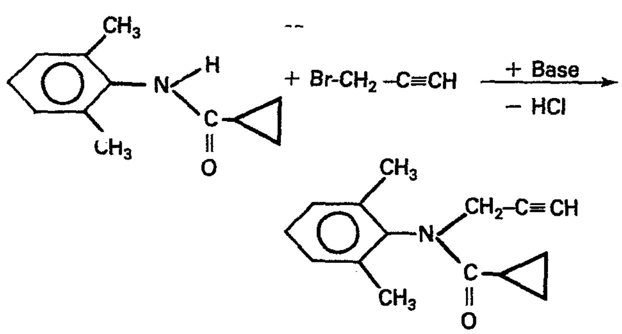


Verwendet man beispielsweise 2,6-Dimethyl-N-(1-methyl-2-propinyl)-cyclopropancarbonsäure-anilid und Kaliumhypobromit als Ausgangsstoffe, so kann der Reaktionsablauf durch das folgende Formelschema wiedergegeben werden (Verfahren c):

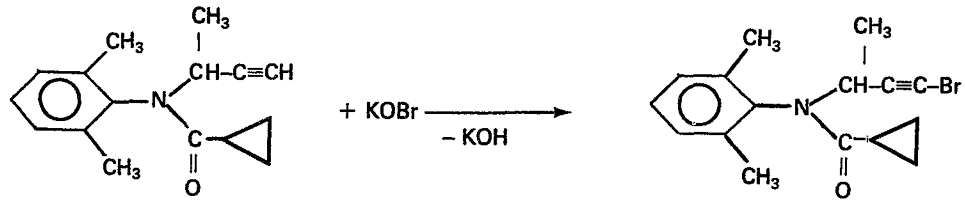


Die bei der Durchführung des erfindungsgemässen Verfahrens (a) als Ausgangsstoffe benötigten N-Propargyl-aniline sind durch die Formel (II) allgemein definiert. In dieser Formel stehen $R^1$, $R^2$, $R^3$, $R^4$ und $R^5$ vorzugsweise für diejenigen Reste, die bereits im Zusammenhang mit der Beschreibung der erfindungsgemässen Stoffe der Formel (I) vorzugsweise für diese Substituenten genannt wurden.

Die N-Propargyl-aniline der Formel (II) sind teilweise bekannt (vergleiche die US-Patentschriften 3 535 377 und 4 001 325), bzw. können sie nach bekannten Verfahren erhalten werden, indem man z.B. entsprechende Aniline mit Propargylhalogeniden der Formel (V) oder den entsprechenden Propargylsulfonaten, wie beispielsweise Mesylaten oder Tosylaten, in Gegenwart eines Säurebinders, wie z.B. Natrium- oder Kaliumcarbonat, gegebenenfalls in Gegenwart eines Katalysators, wie beispielsweise Kupfer(I)chlorid, sowie eines inerten organischen Lösungsmittels, wie beispielsweise Dioxan, bei Temperaturen zwischen 20 und 150 °C umsetzt, wobei vorzugsweise auch ein Überschuss an Anilin eingesetzt werden kann.

N-Propargyl-aniline der Formel (II), bei denen $R^4$ für Methyl steht, können auch durch Umsetzung der entsprechenden Aniline mit Acetylen in Gegenwart von Kupferacetylid unter Druck erhalten werden (vergleiche hierzu Liebigs Ann.Chem. 596, 1 (1955)).

Als Beispiele für die Ausgangsstoffe der Formel (II) seien genannt:

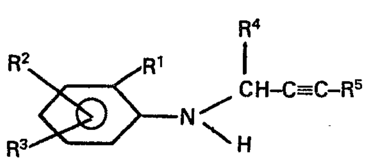 (II)

| $R^1$ | $R^2$ | $R^3$ | $R^4$ | $R^5$ |
|---|---|---|---|---|
| $CH_3$ | $6-CH_3$ | H | H | H |
| $C_2H_5$ | $6-C_2H_5$ | H | H | H |
| $C_2H_5$ | $6-CH_3$ | H | H | H |
| $C(CH_3)_3$ | H | H | H | H |
| $CH_3$ | $3-CH_3$ | H | H | H |
| $CH_3$ | $5-CH_3$ | H | H | H |
| Cl | $6-CH_3$ | H | H | H |
| Cl | $6-C(CH_3)_3$ | H | H | H |
| $CH_3$ | $3-CH_3$ | $6-CH_3$ | H | H |
| $CH_3$ | $6-CH_3$ | H | $CH_3$ | H |
| $C_2H_5$ | $6-C_2H_5$ | H | $CH_3$ | H |
| $C_2H_5$ | $6-CH_3$ | H | $CH_3$ | H |
| $CH_3$ | $6-CH_3$ | H | $C_2H_5$ | H |
| $C_2H_5$ | $6-C_2H_5$ | H | $C_2H_5$ | H |
| $C_2H_5$ | $6-CH_3$ | H | $C_2H_5$ | H |
| $CH_3$ | $6-CH_3$ | H | H | $CH_3$ |
| $C_2H_5$ | $6-C_2H_5$ | H | H | $CH_3$ |
| $C_2H_5$ | $6-CH_3$ | H | H | $CH_3$ |
| $CH_3$ | $6-CH_3$ | H | H | 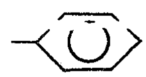 |
| $C_2H_5$ | $6-C_2H_5$ | H | H | 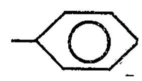 |
| $C_2H_5$ | $6-CH_3$ | H | H | 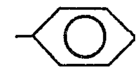 |
| $CH_3$ | $6-CH_3$ | H | $CH_3$ | $CH_3$ |
| $C_2H_5$ | $6-C_2H_5$ | H | $CH_3$ | $CH_3$ |
| $C_2H_5$ | $6-CH_3$ | H | $CH_3$ | $CH_3$ |
| Cl | $6-CH_3$ | H | $CH_3$ | H |
| $CH_3$ | $3-CH_3$ | $6-CH_3$ | $CH_3$ | H |
| $CH_3$ | H | H | $CH_3$ | H |
| $C_2H_5$ | H | H | $CH_3$ | H |
| $i-C_3H_7$ | H | H | $CH_3$ | H |
| $t-C_4H_9$ | H | H | $CH_3$ | H |

Die ausserdem für das erfindungsgemässe Verfahren (a) als Ausgangsstoffe zu verwendenden Säurechloride oder -bromide bzw. -anhydride sowie die Carbonsäuren sind durch die Formeln (IIIa), (IIIb) und (IIIc) allgemein definiert. In diesen Formeln steht $R^6$ vorzugsweise für diejenigen Reste, die bereits im Zusammenhang mit der Beschreibung der erfindungsgemässen Stoffe der Formel (I) vorzugsweise für diesen Substituenten genannt wurden.

Die Säurechloride oder -bromide bzw. -anhydride sowie die Carbonsäuren der Formeln (IIIa), (IIIb) und (IIIc) sind allgemein bekannte Verbindungen der organischen Chemie.

Die bei der Durchführung des erfindungsgemässen Verfahrens (b) als Ausgangsstoffe benötigten Anilide sind durch die Formel (IV) allgemein definiert. In dieser Formel stehen $R^1$, $R^2$, $R^3$ und $R^6$ vorzugsweise für diejenigen Reste, die bereits im Zusammenhang mit der Beschreibung der erfindungsgemässen Stoffe der Formel (I) vorzugsweise für diese Substituenten genannt wurden.

Die Anilide der Formel (IV) können in allgemein bekannter Art und Weise erhalten werden, indem man entsprechende Aniline mit einem Säurechlorid oder -bromid bzw. -anhydrid sowie einer Carbonsäure der Formeln (IIIa), (IIIb) und (IIIc) gemäss den Bedingungen des Verfahrens (a) in Gegenwart eines inerten organischen Lösungsmittels wie beispielsweise Toluol oder Methylenchlorid, gegebenenfalls in Gegenwart eines Säurebindemittels, wie z.B. Kaliumcarbonat oder Triethylamin, oder in Gegenwart eines Katalysators, wie z.B. Dimethylformamid, bei Temperaturen zwischen 0 und 100 °C umsetzt.

Als Beispiele für die Ausgangsstoffe der Formel (IV) seien genannt:

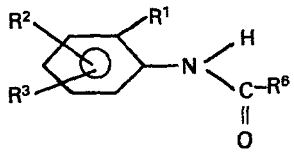

(IV)

| $R^1$ | $R^2$ | $R^3$ | $R^6$ |
|---|---|---|---|
| $CH_3$ | $6\text{-}CH_3$ | H | 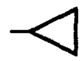 |
| Cl | $6\text{-}CH_3$ | H | 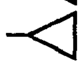 |
| $C_2H_5$ | $6\text{-}CH_3$ | H | 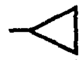 |
| $C_2H_5$ | $6\text{-}C_2H_5$ | H | 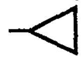 |
| $CH_3$ | $3\text{-}CH_3$ | $6\text{-}CH_3$ | 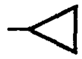 |
| $CH_3$ | H | H | 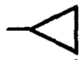 |
| $C_2H_5$ | H | H | 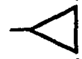 |
| $i\text{-}C_3H_7$ | H | H | 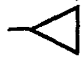 |
| $t\text{-}C_4H_9$ | H | H | 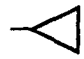 |
| $CH_3$ | $6\text{-}CH_3$ | H | 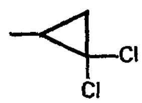 |
| $CH_3$ | $6\text{-}CH_3$ | H | 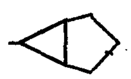 |
| $CH_3$ | $6\text{-}CH_3$ | H | 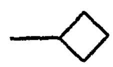 |
| $CH_3$ | $6\text{-}CH_3$ | H | 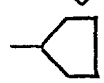 |
| $CH_3$ | $6\text{-}CH_3$ | H | 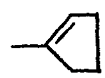 |
| $CH_3$ | $6\text{-}CH_3$ | H | 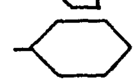 |
| $CH_3$ | $6\text{-}CH_3$ | H | 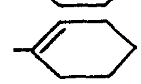 |
| $CH_3$ | $6\text{-}CH_3$ | H | 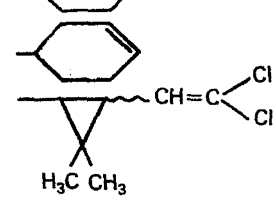 |
| $CH_3$ | $6\text{-}CH_3$ | H | |

Die ausserdem für das erfindungsgemässe Verfahren (b) als Ausgangsstoffe zu verwendenden Propargylhalogenide sind durch die Formel (V) allgemein definiert. In dieser Formel stehen $R^4$ und $R^5$ vorzugsweise für diejenigen Reste, die bereits im Zusammenhang mit der Beschreibung der erfindungsgemässen Stoffe der Formel (I) vorzugsweise für diese Substituenten genannt werden.

Die Propargylhalogenide der Formel (V) sind allgemein bekannte Verbindungen der organischen Chemie.

Die bei der Durchführung des erfindungsgemässen Verfahrens (c) als Ausgangsstoffe benötigten N-Propargylanilide sind durch die Formel (Ia) allgemein definiert. Es handelt sich dabei um erfindungsgemässe Verbindungen, bei denen $R^5$ für Wasserstoff steht.

Als Verdünnungsmittel kommen für die erfindungsgemässe Umsetzung gemäss Verfahrensvariante (a) vorzugsweise inerte organische Lösungsmittel infrage. Hierzu gehören vorzugsweise Ketone, wie Diethylketon, insbesondere Aceton und Methylethylketon; Nitrile, wie Propionitril, insbesondere Acetonitril; Ether, wie Tetrahydrofuran oder Dioxan; aliphatische und aromatische Kohlenwasserstoffe, wie Petrolether, Benzol, Toluol oder Xylol; halogenierte Kohlenwasserstoffe, wie Methylenchlorid, Tetrachlorkohlenstoff, Chloroform oder Chlorbenzol und Ester, wie Essigester.

Das erfindungsgemässe Verfahren (a) kann gegebenenfalls in Gegenwart von Säurebindern (Halogenwasserstoff-Akzeptoren) durchgeführt werden. Als solche können alle üblichen Säurebindemittel verwendet werden. Hierzu gehören vorzugsweise Basen, wie tertiäre Amine, biespielsweise Triethylamin, oder wie Pyridin, ferner anorganische Basen, wie beispielsweise Alkalihydroxide und Alkalicarbonate. Gegebenenfalls kann auch ein Katalysator, wie Dimethylformamid, verwendet werden.

Die Reaktionstemperaturen können bei der Durchführung des erfindungsgemässen Verfahrens (a) in einem grösseren Bereich variiert werden. Im allgemeinen arbeitet man zwischen 0 und 120 °C, vorzugsweise zwischen 20 und 100 °C.

Bei der Durchführung des erfindungsgemässen Verfahrens (a) arbeitet man vorzugsweise in molaren Mengen. Die Isolierung der Verbindungen der Formel (I) erfolgt in üblicher Weise.

Bei der Durchführung der erfindungsgemässen Verfahrensvariante ($a_2$) verwendet man vorzugsweise Phosphoroxychlorid/Pyridin als Aktivierungsagens.

Als Verdünnungsmittel kommen für die erfindungsgemässe Umsetzung gemäss Verfahren (b) alle inerten organischen Lösungsmittel infrage. Hierzu gehören vorzugsweise Ether, wie Diethylether, Dioxan oder Tetrahydrofuran; aromatischen Kohlenwasserstoffe, wie Benzol, Toluol oder Xylol; halogenierte Kohlenwasserstoffe, wie Methylenchlorid, Tetrachlorkohlenstoff, Chloroform oder Chlorbenzol; Ester, wie Essigester; Ketone, wie Methylisobutylketon; Nitrile wie Acetonitril sowie Dimethylformamid oder Dimethylsulfoxid.

Die erfindungsgemässe Umsetzung gemäss Verfahren (b) wird in Gegenwart eines Säurebindemittels durchgeführt. Als solche können alle üblichen Säurebindemittel verwendet werden. Hierzu gehören vorzugsweise anorganische Basen, wie beispielsweise Alkalihydroxide und Alkalicarbonate.

Die Reaktionstemperaturen können bei der Durchführung des erfindungsgemässen Verfahrens (b) in einem grösseren Bereich variiert werden. Im allgemeinen arbeitet man zwischen −70

und +100 °C, vorzugsweise zwischen −20 und +80 °C.

Als Verdünnungsmittel kommen für die erfindungsgemässe Umsetzung gemäss Verfahren (c) Wasser sowie gegenüber Alkalihypohalogenit inerte organische Lösungsmittel infrage. Hierzu gehören vorzugsweise Alkohole, wie Methanol oder Ethanol; Ether, wie Diethylether, Dioxan oder Tetrahydrofuran, sowie auch Zweiphasengemische, wie z.B. Ether/Wasser.

Die Reaktionstemperaturen können beim Verfahren (c) in einem grösseren Bereich variiert werden. Im allgemeinen arbeitet man zwischen 0 und 100 °C, vorzugsweise zwischen und und 40 °C.

Bei der Durchführung des erfindungsgemässen Verfahrens (c) setzt man vorzugsweise auf 1 Mol der Verbindungen der Formel (Ia) 1 bis 1,5 Mol Hypohalogenit ein, wobei das Alkalihypohalogenit in-situ aus dem entsprechenden Halogen und dem Alkalihydroxid erzeugt wird. (vgl. Houben-Weyl, Bd.V/2a, S.608–610 (1977)). Die Isolierung der Endprodukte erfolgt in üblicher Weise.

Die erfindungsgemässen Wirkstoffe weisen eine starke mikrobizide Wirkung auf und können zur Bekämpfung von unerwünschten Mikroorganismen praktisch eingesetzt werden. Die Wirkstoffe sind für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Als Pflanzenschutzmittel können die erfindungsgemässen Wirkstoffe mit besonders gutem Erfolg zur Bekämpfung von Oomyceten, z.B. gegen den Erreger der Kraut- und Braunfäule der Tomate und Kartoffel (Phytophthora infestans) eingesetzt werden. Besonders hervorzuheben ist, dass die erfindungsgemässen Wirkstoffe nicht nur eine protektive, sondern auch eine kurativ/eradikative Wirkung entfalten. Ausserdem besitzen sie systemische Eigenschaften. So gelingt es, Pflanzen gegen Pilzbefall zu schützen, wenn man den Wirkstoff über den Boden und die Wurzel oder über das Saatgut den oberirdischen Teilen der Pflanze zuführt.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromate, wie Xylol, Toluol, oder Alkylnaphthaline, chlorierte Aromate oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweisshydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemässen Wirkstoffe können in den Formulierungen oder in den verschiedenen Anwendungsformen in Mischung mit anderen bekannten Wirkstoffen vorliegen, wie Fungiziden, Bakteriziden, Insektiziden, Akariziden, Nematiziden, Herbiziden, Schutzstoffen gegen Vogelfrass,

Wuchsstoffen, Pflanzennährstoffen und Bodenstrukturverbesserungsmitteln.

Die Wirkstoffe können als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher Weise, z.B. durch Giessen, Tauchen, Spritzen, Sprühen, Vernebeln, Verdampfen, Injizieren, Verschlämmen, Verstreichen, Stäuben, Streuen, Trockenbeizen, Feuchtbeizen, Nassbeizen, Schlämmbeizen oder Inkrustieren.

Bei der Behandlung von Pflanzenteilen können die Wirkstoffkonzentrationen in den Anwendungsformen in einem grösseren Bereich variiert werden. Sie liegen im allgemeinen zwischen 1 und 0,0001 Gew.-%, vorzugsweise zwischen 0,5 und 0,001%.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behandlung des Bodens sind Wirkstoffkonzentrationen von 0,00001 bis 0,1 Gew.-%, vorzugsweise von 0,0001 bis 0,02%, am Wirkungsort erforderlich.

In den nachfolgenden Beispielen wird die nachstehend angegebene Verbindung als Vergleichsubstanz eingesetzt:

(A) = 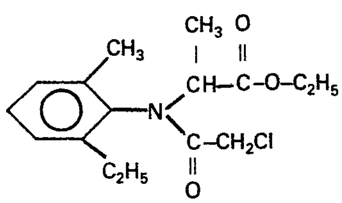

N-Chloracetyl-N-(2-ethyl-6-methyl-phenyl)-alanin-ethylester

Beispiel A

Phytophthora-Test (Tomaten)/Protektiv

| | |
|---|---|
| Lösungsmittel: | 4,7 Gewichtsteile Aceton |
| Emulgator: | 0,3 Gewichtsteile Alkyl-aryl-polyglykol-ether |
| Wasser: | 95,0 Gewichtsteile |

Man vermischt die für die gewünschte Wirkstoffkonzentration in der Spritzflüssigkeit nötige Wirkstoffmenge mit der angegebenen Menge des Lösungsmittels und verdünnt das Konzentrat mit der angegebenen Menge Wasser, welches die genannten Zusätze enthält.

Mit der Spritzflüssigkeit bespritzt man junge Tomatenpflanzen mit 2 bis 4 Laubblättern bis zur Tropfnässe. Die Pflanzen verbleiben 24 Stunden bei 20 °C und einer relativen Luftfeuchtigkeit von 70% im Gewächshaus. Anschliessend werden die Tomatenpflanzen mit einer wässrigen Sporensuspension von Phytophthora infestans inokuliert. Die Pflanzen werden in eine Feuchtkammer mit einer 100%igen Luftfeuchtigkeit und einer Temperatur von 18 bis 20 °C gebracht.

Nach 5 Tagen wird der Befall der Tomatenpflanzen bestimmt. Die erhaltenen Boniturwerte werden auf Prozent Befall umgerechnet. 0% bedeutet keinen Befall, 100% bedeutet, dass die Pflanzen vollständig befallen sind.

Die nachfolgende Tabelle zeigt die Versuchsresultate auf:

Tabelle A

Phytophthora-Test(Tomaten)/Protektiv

| Wirkstoff | Befall in % bei einer Wirkstoffkonzentration von 0,0005% |
|---|---|
| 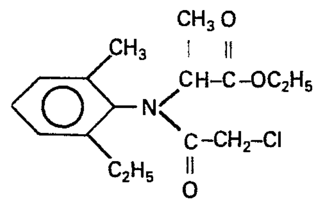 (A) (bekannt) | 59 |
| 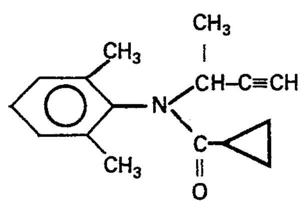 (1) | 11 |

Beispiel B

Phytophthora-Test (Tomaten)/Systemisch

| | |
|---|---|
| Lösungsmittel: | 4,7 Gewichtsteile Aceton |
| Dispergiermittel: | 0,3 Gewichtsteile Alkyl-aryl-polyglykolether |
| Wasser: | 95,0 Gewichtsteile |

Man vermischt die für die gewünschte Wirkstoffkonzentration in der Giessflüssigkeit nötige Wirkstoffmenge mit der angegebenen Menge des Lösungsmittels und verdünnt das Konzentrat mit der angegebenen Menge Wasser, welches die genannten Zusätze enthält.

In Einheitserde angezogene Tomatenpflanzen mit 2 bis 4 Laubblättern werden mit 10 ml der Giessflüssigkeit in der angegebenen Wirkstoffkonzentration, bezogen auf 100 ml Erde, gegossen.

Die so behandelten Pflanzen werden nach der Behandlung mit einer wässrigen Sporensuspension von Phytophthora infestans inokuliert. Die Pflanzen werden in eine Feuchtkammer mit einer Luftfeuchtigkeit von 100% und einer Temperatur von 18 bis 20 °C gebracht. Nach 5 Tagen wird der Befall der Tomatenpflanzen bestimmt. Die so erhaltenen Boniturwerte werden auf Prozent Befall umgerechnet. 0% bedeutet keinen Befall, 100% bedeutet, dass die Pflanzen vollständig befallen sind.

Die nachfolgende Tabelle zeigt die Versuchsresultate auf:

Tabelle B
Phytophthora-Test (Tomaten)/Systemisch

| Wirkstoff | Befall in % bei einer Wirkstoffkonzentration von 100 ppm |
|---|---|
| 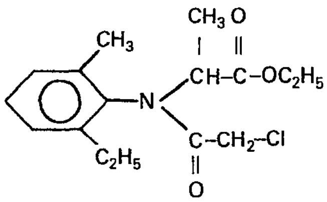<br>(A) (bekannt) | 71 |
| 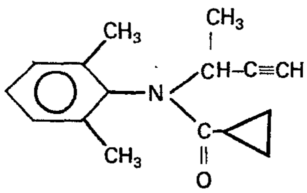<br>(1) | 0 |

Herstellungsbeispiele
Beispiel 1

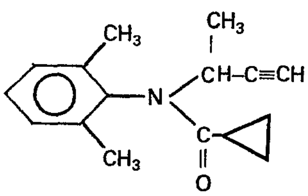

In eine siedende Lösung von 9,0 g (0,05 Mol) 3-(2,6-Dimethylanilino)-1-butin und 5,95 g (0,075 Mol) Pyridin in 50 ml Tetrahydrofuran tropft man in 5 Minuten 8,0 g (0,075 Mol) Cyclopropancarbonsäurechlorid und erhitzt 5,5 Stunden unter Rückfluss. Das Lösungsmittel wird im Vakuum abdestilliert, der Rückstand zwischen Essigester und verdünnter Salzsäure verteilt, die organische Phase mit 5%-iger Natronlauge und Wasser gewaschen, über Natriumsulfat getrocknet und eingedampft. Der schwarze ölige Rückstand (9,7 g) wird in Chloroform gelöst, auf eine Kieselgel-Säule (24×3 cm) aufgetragen und mit 250 ml Chloroform eluiert. Nach Abdampfen des Lösungsmittels verbleiben 8,9 g (73,9% der Theorie) 2,6-Dimethyl-N-(1-methyl-2-propinyl)-cyclopropancarbonsäureanilid als braunes Öl mit einem Brechungsindex von $n_D^{24}$ : 1,5263.

In analoger Weise und gemäss den Verfahren (a), (b) und (c) werden die folgenden Verbindungen der allgemeinen Formel

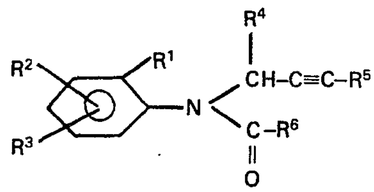 (I)

erhalten:

| Bsp. Nr. | $R^1$ | $R^2$ | $R^3$ | $R^4$ | $R^5$ | $R^6$ | Schmelzpunkt (%C) |
|---|---|---|---|---|---|---|---|
| 2 | $CH_3$ | 6-$CH_3$ | H | $CH_3$ | H | 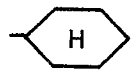 | 80–83 |
| 3 | $CH_3$ | 6-$CH_3$ | H | $CH_3$ | H | 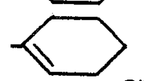 | $n_D^{20}$ : 1,5389 |
| 4 | $CH_3$ | 6-$CH_3$ | H | $CH_3$ | H | 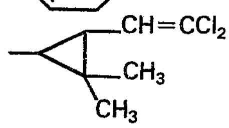 | 101–02 |
| 5 | $CH_3$ | 6-$CH_3$ | H | $CH_3$ | H | 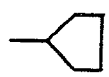 | 112–13 |
| 6 | $CH_3$ | 6-$CH_3$ | H | $CH_3$ | H | 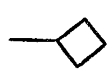 | 72–73 |
| 7 | $CH_3$ | 6-$CH_3$ | H | H | H | 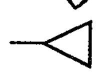 | 72–76 |
| 8 | $CH_3$ | 6-$CH_3$ | H | H | H | 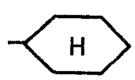 | $n_D^{20}$ : 1,5400 |
| 9 | $CH_3$ | 6-$CH_3$ | H | H | H | 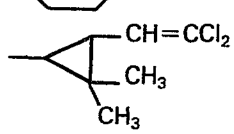 | 62–63 |
| 10 | $CH_3$ | 6-$CH_3$ | H | $CH_3$ | H | 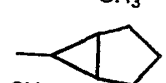 | $n_D^{20}$ : 1,5232 |
| 11 | $CH_3$ | 6-$CH_3$ | H | H | H | 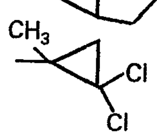 | 155–56 |

**Patentansprüche**

1) Cycloalkan(alken)carbonsäure-anilide der allgemeinen Formel

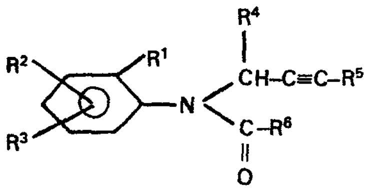

(I)

in welcher

$R^1$ für Wasserstoff, Alkyl oder Halogen steht,

$R^2$ für Wasserstoff oder Alkyl steht,

$R^3$ für Wasserstoff oder Alkyl steht,

$R^4$ für Wasserstoff oder Alkyl steht,

$R^5$ für Wasserstoff, Alkyl, Halogen oder gegebenenfalls substituiertes Phenyl steht und

$R^6$ für gegebenenfalls substituiertes Cycloalkyl oder Cycloalkenyl steht.

2) Cycloalkan(alken)carbonsäure-anilide der allgemeinen Formel (I), in welcher

$R^1$ für Wasserstoff, Alkyl oder Halogen steht,

$R^2$ für Wasserstoff oder Alkyl steht,

$R^3$ für Wasserstoff oder Alkyl steht,

$R^4$ für Alkyl steht,

$R^5$ für Wasserstoff, Alkyl, Halogen oder gegebenenfalls substituiertes Phenyl steht und

$R^6$ für gegebenenfalls substituiertes Cycloalkyl oder Cycloalkenyl steht.

3) Verfahren zur Herstellung von Cycloalkan(alken)carbonsäure-aniliden der allgemeinen Formel (I),

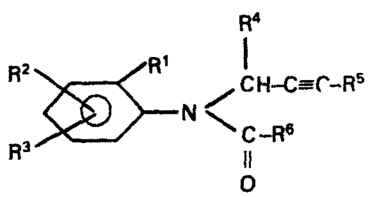

(I)

in welcher

$R^1$ für Wasserstoff, Alkyl oder Halogen steht,

$R^2$ für Wasserstoff oder Alkyl steht,

$R^3$ für Wasserstoff oder Alkyl steht,

$R^4$ für Wasserstoff oder Alkyl steht,

$R^5$ für Wasserstoff, Alkyl, Halogen oder gegebenenfalls substituiertes Phenyl steht und

$R^6$ für gegebenenfalls substituiertes Cycloalkyl oder Cycloalkenyl steht, dadurch gekennzeichnet, dass man

a) N-Propargyl-aniline der Formel

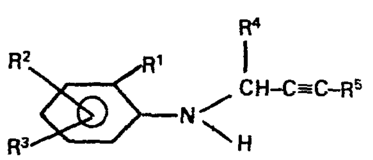

(II)

in welcher

$R^1$ bis $R^5$ die oben angegebene Bedeutung haben,

1) mit Säurechloriden oder -bromiden bzw. -anhydriden der Formeln

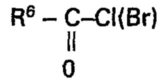

(IIIa)

bzw.

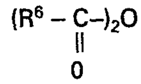

(IIIb)

in welchen

$R^6$ die oben angegebene Bedeutung hat, in Gegenwart eines Verdünnungsmittels und gegebenenfalls in Gegenwart eines Säurebindemittels umsetzt, oder

2) mit Carbonsäure der Formel

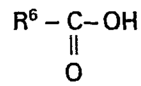

(IIIc)

in welcher

$R^6$ die oben angegebene Bedeutung hat, in Gegenwart eines Aktivierungsagens und gegebenenfalls in Gegenwart eines Säurebindemittels umsetzt, oder

b) Anilide der Formel

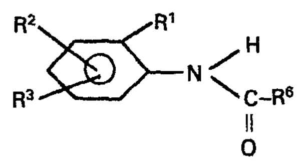

(IV)

in welcher

$R^1$ bis $R^3$ und

$R^6$ die oben angegebene Bedeutung haben, mit Propargylhalogeniden der Formel

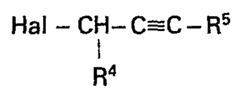

(V)

in welcher

$R^4$ und $R^5$ die oben angegebene Bedeutung haben, und

Hal für Chlor oder Brom steht, in Gegenwart eines Säurebinders und gegebenenfalls in Gegenwart eines organischen Verdünnungsmittels oder in einem wässrig-organischen Zweiphasensystem in Gegenwart eines Phasentransferkatalysators umsetzt; oder einzelne Verbindungen der Formel (I), indem man

c) erfindungsgemässe N-Propargyl-anilide der Formel

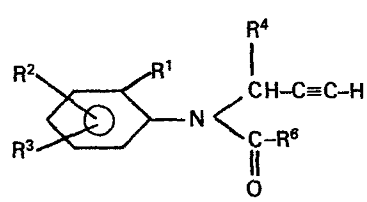

(Ia)

in welcher

$R^1$ bis $R^4$ und

$R^6$ die oben angegebene Bedeutung haben, in an sich bekannter Art und Weise mit Alkalihypohalogenit in Gegenwart eines Verdünnungsmittels umsetzt.

4) Fungizide Mittel, gekennzeichnet durch einen Gehalt an mindestens einem Cycloalkan(alken)-carbonsäure-anilid der Formel (I).

5) Verwendung von Cycloalkan(alken)carbonsäure-aniliden der Formel (I) zur Bekämpfung von Pilzen.

**Revendications**

1. Anilides d'acides cycloalcane(alcène)carboxyliques de formule générale:

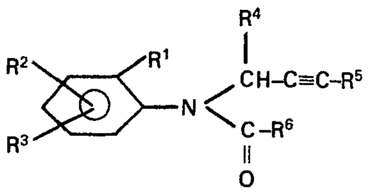 (I)

dans laquelle

$R^1$ représente un atome d'hydrogène, un groupe alkyle ou un atome d'halogène,

$R^2$ représente un atome d'hydrogène ou un groupe alkyle,

$R^3$ représente un atome d'hydrogène ou un groupe alkyle,

$R^4$ représente un atome d'hydrogène ou un groupe alkyle,

$R^5$ représente un atome d'hydrogène, un groupe alkyle, un atome d'halogène ou un groupe phényle éventuellement substitué, et

$R^6$ représente un groupe cycloalcényle ou cycloalkyle éventuellement substitué.

2. Anilides d'acides cycloalcane(alcène)carboxyliques de formule générale (I) dans laquelle

$R^1$ représente un atome d'hydrogène, un groupe alkyle ou un atome d'halogène,

$R^2$ représente un atome d'hydrogène ou un groupe alkyle,

$R^3$ représente un atome d'hydrogène ou un groupe alkyle,

$R^4$ représente un groupe alkyle,

$R^5$ représente un atome d'hydrogène, un groupe alkyle, un atome d'halogène ou un groupe phényle éventuellement substitué, et

$R^6$ représente un groupe cycloalcényle ou cycloalkyle éventuellement substitué.

3. Procédé de préparation d'anilides d'acides cycloalcane(alcène)carboxyliques de formule générale (I):

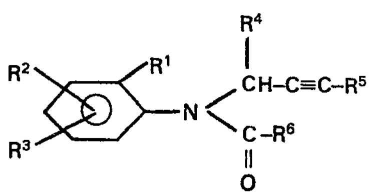 (I)

dans laquelle

$R^1$ représente un atome d'hydrogène, un groupe alkyle ou un atome d'halogène,

$R^2$ représente un atome d'hydrogène ou un groupe alkyle,

$R^3$ représente un atome d'hydrogène ou un groupe alkyle,

$R^4$ représente un atome d'hydrogène ou un groupe alkyle,

$R^5$ représente un atome d'hydrogène, un groupe alkyle, un atome d'halogène ou un groupe phényle éventuellement substitué, et

$R^6$ représente un groupe cycloalcényle ou cycloalkyle éventuellement substitué, caractérisé en ce que:

a) on fait réagir des N-propargyl-anilines de formule:

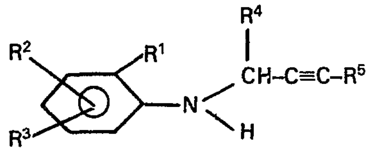 (II)

dans laquelle

$R^1$ à $R^5$ ont les significations indiquées ci-dessus,

1) avec des chlorures, des bromures ou des anhydrides d'acides répondant aux formules:

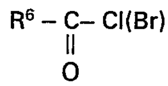 (IIIa)

et

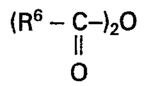 (IIIb)

où

$R^6$ a la signification indiquée ci-dessus, en présence d'un diluant et éventuellement en présence d'un agent fixateur d'acide, ou

2) avec des acides carboxyliques de formule:

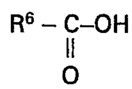 (IIIc)

dans laquelle

$R^6$ a la signification indiquée ci-dessus, en présence d'un agent d'activation et éventuellement en présence d'un agent fixateur d'acide, ou

b) on fait réagir des anilides de formule:

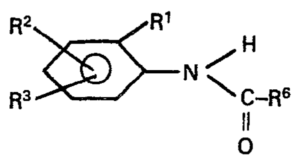 (IV)

dans laquelle

$R^1$ à $R^3$ et $R^6$ ont les significations indiquées ci-dessus,

avec des halogénures de propargyle de fomule:

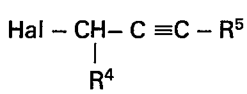 (V)

dans laquelle

$R^4$ et $R^5$ ont les significations indiquées ci-dessus, et

Hal représente un atome de chlore ou de brome, en présence d'un agent fixateur d'acide et éventuellement en présence d'un diluant organique ou dans un système aqueux-organique à deux phases en présence d'un catalyseur de transfert de phases; ou on prépare des composés particuliers de formule (I):

c) en faisant réagir des N-propargyl-anilides suivant l'invention et répondant à la formule:

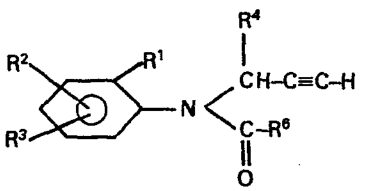

(Ia)

dans laquelle

$R^1$ à $R^4$ et $R^6$ ont les significations indiquées ci-dessus,

de façon connue en soi, avec un hypohalogénite alcalin en présence d'un diluant.

4. Agents fongicides, caractérisés en ce qu'ils contiennent au moins un anilide d'acide cycloalcane(alcène)carboxylique de formule (I).

5. Utilisation d'anilides d'acides cycloalcane(alcène)carboxyliques de formule (I) pour combattre les champignons.

**Claims**

1) Cycloalkane- and cycloalkene-carboxylic acid anilides of the general formula

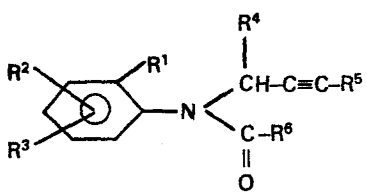

(I)

in which

$R^1$ represents hydrogen, alkyl or halogen,
$R^2$ represents hydrogen or alkyl,
$R^3$ represents hydrogen or alkyl,
$R^4$ represents hydrogen or alkyl,
$R^5$ represents hydrogen, alkyl, halogen or optionally substituted phenyl and
$R^6$ represents optionally substituted cycloalkyl or cycloalkenyl.

2) Cycloalkane- and cycloalkene-carboxylic acid anilides of the general formula (I), in which
$R^1$ represents hydrogen, alkyl or halogen,
$R^2$ represents hydrogen or alkyl,
$R^3$ represents hydrogen or alkyl,
$R^4$ represents alkyl,
$R^5$ represents hydrogen, alkyl, halogen or optionally substituted phenyl and
$R^6$ represents optionally substituted cycloalkyl or cycloalkenyl.

3) Process for the preparation of cycloalkane- and cycloalkene-carboxylic acid anilides of the general formula (I),

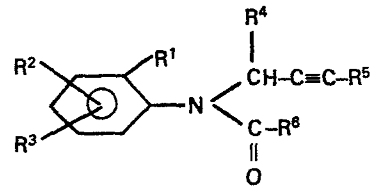

(I)

in which

$R^1$ represents hydrogen, alkyl or halogen,
$R^2$ represents hydrogen or alkyl,
$R^3$ represents hydrogen or alkyl,
$R^4$ represents hydrogen or alkyl,
$R^5$ represents hydrogen, alkyl, halogen or optionally substituted phenyl and
$R^6$ represents optionally substituted cycloalkyl or cycloalkenyl, characterised in that

a) N-propargyl-anilines of the formula

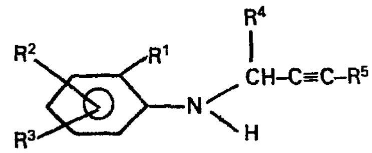

(II)

in which

$R^1$ to $R^5$ have the meaning indicated above,

1) are reacted with acid chlorides, bromides or anhydrides of the formula

$$R^6 - \underset{\underset{O}{\parallel}}{C} - Cl(Br) \qquad (IIIa)$$

or

$$(R^6-\underset{\underset{O}{\parallel}}{C}-)_2O \qquad (IIIb)$$

in which

$R^6$ has the meaning indicated above, in the presence of a diluent and if appropriate in the presence of an acid-binding agent, or

2) are reacted with carboxylic acids of the formula

$$R^6 - \underset{\underset{O}{\parallel}}{C} - OH \qquad (IIIc)$$

in which

$R^6$ has the meaning indicated above, in the presence of an activating agent and if appropriate in the presence of an acid-binding agent, or

b) anilides of the formula

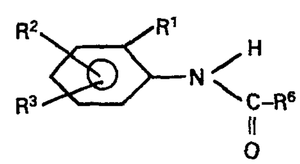

(IV)

in which

$R^1$ to $R^3$ and $R^6$ have the meaning indicated above, are reacted with propargyl halides of the formula

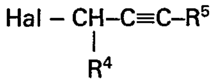

(V)

in which

$R^4$ and $R^5$ have the meaning indicated above and

Hal represents chlorine or bromine, in the presence of an acid-binding agent and if appropriate in the presence of an organic diluent, or in an aqueous-organic two-phase system in the presence of a phase transfer catalyst; or individual compounds of the formula (I) by a process in which

c) N-propargyl-anilides according to the invention, of the formula

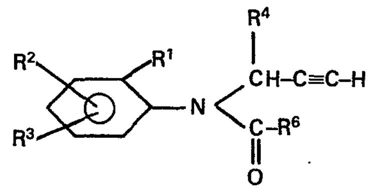

(Ia)

in which

$R^1$ to $R^4$ and $R^6$ have the meaning indicated above, are reacted with an alkali metal hypohalite in the presence of a diluent in a manner which is in itself known.

4. Fungicidal agents, characterised in that they contain at least one cycloalkane- or cycloalkene-carboxylic acid anilide of the formula (I).

5) Use of cycloalkane- and cycloakene-carboxylic acid anilides of the formula (I) for combating fungi.